## Europäisches Patentamt

## European Patent Office

## Office européen des brevets

(11) Numéro de publication: **0 126 056**

**B1**

# FASCICULE DE BREVET EUROPÉEN

(45) Date de publication du fascicule du brevet: **10.08.88**

(51) Int. Cl.⁴: **B 64 D 11/06**

(21) Numéro de dépôt: **84870060.5**

(22) Date de dépôt: **07.05.84**

---

(54) Installation de sièges à l'intérieur d'un fuselage d'avion.

---

(30) Priorité: **16.05.83 FR 8308078**

(43) Date de publication de la demande:
**21.11.84 Bulletin 84/47**

(45) Mention de la délivrance du brevet:
**10.08.88 Bulletin 88/32**

(84) Etats contractants désignés:
**BE DE FR GB IT LU NL**

(56) Documents cité:
**FR-A-1 311 972**
**GB-A-590 030**
**US-A-2 414 730**
**US-A-2 947 349**

**Le dossier contient des informations techniques présentées postérieurement au dépôt de la demande et ne figurant pas dans le présent fascicule.**

(73) Titulaire: **S.A. Seatco N.V., Rue de Naples; 15 Bte 10, B-1050 Bruxelles (BE)**

(72) Inventeur: **Braun, François, Avenue des Pins, 16, B-1950 Kraainem (BE)**
Inventeur: **Braun, Yves, Avenue des Pins, 16, B-1950 Kraainem (BE)**

(74) Mandataire: **Fobe, Edouard, Bureau VANDER HAEGHEN 63, Avenue de la Toison d'Or, B-1060 Bruxelles (BE)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention est relative à une installation ou un agencement de sièges à l'intérieur d'un fuselage à axe central d'un avion pressurisé pour le transport de passagers comprenant une zone pour passagers délimitée par un plancher, un plafond et des parois latérales s'étendant entre deux extrémités antérieure et postérieure du fuselage, cette installation comportant des rangées d'au moins deux sièges contigus montées sur le plancher précité d'un côté d'au moins un couloir longitudinal et dirigées vers l'extrémité antérieure du fuselage, chaque rangée de sièges ayant un plan vertical de symétrie et chaque siège ayant également un plan vertical de symétrie, le plan vertical de symétrie d'au moins un siège de chaque rangée formant un angle avec un plan vertical parallèle à ou contenant l'axe central du fuselage.

Il est bien connu que les constructeurs de véhicules pour le transport de passagers cherchent à accomoder un nombre optimum de passagers sur une même rangée de sièges dans des conditions de confort acceptables, en tenant compte des réglementations imposant, dans un but de sécurité d'évacuation, une largeur minimum aux couloir longitudinaux. On a déjà proposé pour améliorer le confort des passagers de modifier l'installation ou l'agencement classique des rangées transversales de sièges dont les plans verticaux de symétrie sont tous parallèles au plan vertical de symétrie des couloirs.

Ainsi, dans une installation du type indiqué dans le premier paragraphe du présent mémoire, connue par les documents US-A-2 414 730 et US-A-2 947 349, le plan vertical de symétrie des sièges adjacents à une paroi latérale de l'habitacle et le plan vertical de symétrie du couloir forment aussi un angle aigu ouvert vers l'avant de ces sièges.

Il est apparu cependant que cet angle doit être au moins de 30°, afin que les dossiers des sièges adjacents à la paroi latérale puissent être suffisamment écartés de cette paroi pour pouvoir installer des tablettes triangulaires ou des repose-pieds entre ces sièges et cette paroi. Etant donné que tous les sièges d'une même rangée transversale ont leurs plans verticaux de symétrie parallèles, l'angle aigu formé par les plans verticaux de symétrie des sièges adjacents à un couloir et le plan vertical de symétrie de ce couloir doit dès lors aussi être d'au moins 30°, en sorte que ces sièges viennent nécessairement empiéter sur le couloir et réduire sa largeur. Toutefois pour disposer d'un couloir suffisamment large pour le passage des passagers, il faut soit décaler longitudinalement les rangées de sièges disposées d'un côté du couloir par rapport aux rangées de sièges disposées de l'autre côté du couloir, comme proposé dans le document US-A-2 414 730, ce qui entraîne une perte de place aux extrémités longitudinales de l'habitacle, soit réduire le nombre de sièges par rangée en utilisant l'espace pour des repose-pieds, comme c'est le cas dans l'installation selon le document US-A-2 947 349.

Dans une autre installation de sièges du type décrit dans le premier paragraphe du présent mémoire, connue par le document GB-A-590 030, dont le plan vertical de symétrie des sièges adjacents au couloir et le plan vertical de symétrie du couloir sont parallèles, le plan vertical de symétrie des sièges adjacents à une paroi latérale de l'habitacle et le plan de symétrie du couloir forment un angle compris entre 15° et 45° ouvert vers l'avants de ces sièges, chaque siège adjacent à la paroi latérale étant décalé vers l'avant par rapport au siège adjacent.

Cette disposition de sièges ne permet pas de gagner de la place dans le couloir et n'améliore pas l'accès aux coffres à bagages à main disposés sous le plafond de l'habitacle. De plus, cette disposition n'est pas applicable aux sièges de rangées centrales d'un habitacle comportant plus d'un seul couloir. Enfin le décalage vers l'avant du siège adjacent à une paroi latérale de l'habitacle nécessite soit que les sièges soient indépendants, soit la construction d'ensembles bi-place ou tri-place plus compliquée, plus onéreuse et plus lourde, ce oue l'on désire éviter dans des engins de transport car, étant donné l'augmentationn du coût opérationnel du transport, en raison notamment de la hausse du prix du carburant, il est devenu indispensable d'utiliser au mieux l'espace de l'habitacle pour y loger un maximum de passagers dans des conditions de confort et de sécurité acceptables.

La présente invention a pour but une installation de sièges qui permet pour un habitacle de dimensions données, soit d'augmenter le nombre de sièges par rangée, en conservant le même confort par siège, soit d'augmenter ce confort sans diminuer le nombre de sieges par rangée. Elle a également pour but d'améliorer la circulation des passagers dans le couloir ainsi que l'accès aux armoires suspendues pour les bagages à main.

Conformement à la présente invention, une installation ou un agencement de sièges du type décrit dans le premier paragraphe du présent mémoire est essentiellement caractérisée en ce que les plans verticaux de symétrie de chaque siège d'extrémité de chaque rangée de sièges convergent l'un vers l'autre et forment avec le plan vertical de symétrie, parallèle à ou contenant l'axe central du fuselage, de cette rangée de sièges un même angle aigu ouvert vers l'extrémité postérieure du fuselage, cet angle étant inférieur à environ 15° et supérieur à environ 5°, cet angle aigu étant, de préférence, d'environ 12°.

Dans une forme de réalisation de l'installation suivant l'invention, dans laquelle chaque rangée de sièges contigus comprend au moins trois sièges, le plan vertical de symétrie du ou des sièges non adjacents à un couloir et le plan vertical de symétrie longitudinal du couloir sont parallèles.

Selon une autre particularité de l'invention, les rangées de sièges disposées d'un côté du couloir sont décalées par rapport aux rangées de sièges disposées du côté opposé du même couloir.

On a constaté de manière surprenante que la disposition suivant l'invention permet, du fait de la convergence vers l'avant des plans verticaux du symeitrie des deux sièges d'extrémité de chaque rangée de sièges, d'augmenter la largeur des dossiers au niveau des épaules et des coudes des occupants et de diminuer la largeur des assises au niveau des jambes, ce qui est très favorable pour l'occupant, puisque cette disposition correspond à sa morphologie naturelle. Ce gain de place au niveau des épaules est particulièrement avantageux, car il permet en outre de faire face à la diminution d'espacement entre passagers provoquée par l'augmentation constatée de la carrure moyenne des passagers d'origine européenne et nord-américaine d'environ 25 mm entre 1950 et 1980.

On a également constaté que la disposition suivant l'invention permet, de manière inattendue, d'augmenter la capacité en sièges d'un avion, sans affecter sensiblement le confort des passagers au niveau des épaules.

D'autres particularités et détails de l'invention apparaitront au cours de la description suivante d'installations en référence aux dessins annexés au présent mémoire, qui représentent à titre d'exemples seulement, plusieurs formes de réalisation de l'invention. Dans ces dessins:

- la figure 1 est une vue en plan de l'intérieur de l'habitecle d'un avion, selon une première forme de réalisation de l'installation selon l'invention avec deux couloirs longitudinaux, comportant entre une paroi latérale et chacun des couloirs, une succession de rangées transversales de deux sièges et entre deux couloirs une succession de rangées de quatre sièges;

- la figure 2 est une vue partielle après coupe verticale de l'habitacle de la figure 1;

- la figure 3 est une vue analogue à la figure 7 d'une deuxième forme de réalisation d'une installation suivant l'invention comportant, de part et d'autre des deux couloirs longitudinaux, une succession de rangées de trois sièges;

- la figure 4 est une vue analogue à la figure 3 dans laquelle les rangées transversales de sièges entre les couloirs sont décalées longitudinalement par rapport aux rangées transversales des sièges disposées entre l'un de ces couloirs et une paroi latérale adjacente;

- les figures 5 et 6 sont des vues en plan à plus grande échelle illustrant deux étapes pour la réalisation d'un ensemble multiplace comportant trois sièges;

- la figure 7 est une vue en plan d'une installation comprenant sept sièges par rangée transversale répartis de part et d'autre de deux couloirs longitudinaux, et

- les figures 8 et 9 sont des vues en plan d'installations connues rappelées au début de l'introduction du présent mémoire.

Dans ces figures, les mêmes notations de référence désignent des éléments identiques.

Les installations de sièges décrites sont destinées à l'équipement d'avons de transport pressurisés.

Dans les exemples, on a illustré des installations appliquées à un avion dont on a représenté seulement un habitacle ou fuselage qui est formé d'un plancher 2, d'un plafond 3 et de parois latérales 4 aménagés à l'intérieur d'un fuselage entre des extrémités antérieure 5 et postérieure 6 symbolisées par des lignes brisées.

L'habitacle comprend des sièges 7, comportant chacun une assise 8, un dossier 9 et des accoudoirs 10. Ces sièges sont disposés en rangées espacées le long de deux couloirs 11-12 transversalement à ceux-ci. Ces couloirs ont leurs plans de symétrie longitudinaux 13 parallèles. Les sièges adjacents à l'un des couloirs sont désignés par 14 et leur plan de symétrie respectif est désigné par 15; les sièges adjacents à l'une des parois latérales sont désignés par 16 et leur plan de symétrie respectif est désigné par 17, tandis que les sièges non adjacents à un couloir ou à une paroi latérale sont désignés par 18 et leur plan de symétrie respectif par 19.

Les sièges 14 adjacents aux couloirs 11, 12 sont inclinés par rapport aux couloirs, de manière que leur plan de symétrie respectif 15 forme avec le plan de symétrie 13 des couloirs, un angle aigu 20 inférieur à 15° et supérieur à 5° et est de préférence 12° ouvert vers l'avant des sièges.

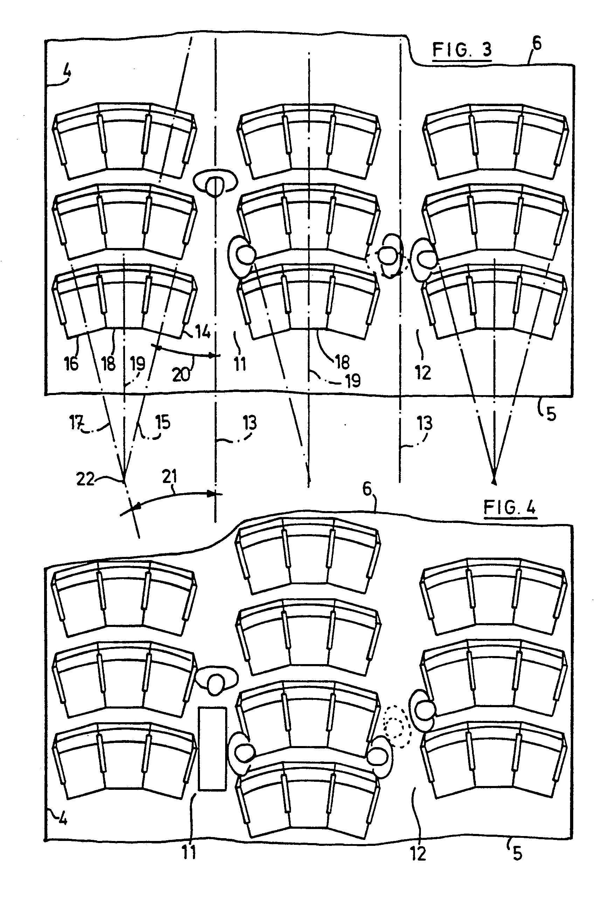

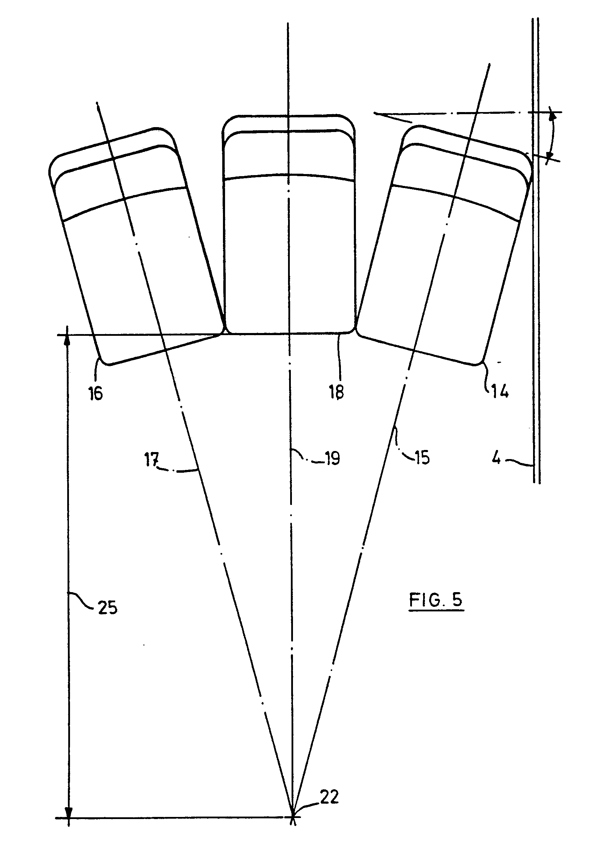

Dans le cas où la rangée comporte trois sièges, comme montré aux figures 3 et 5, le plan de symetrie 17 des sieges 16 adjacents à une paroi latérale 4 forme avec le plan de symétrie 13 du couloir longitudinal adjacent un angle aigu 21 inférieur à 15° et supérieur à 5° et est de préférence 12° ouvert vers l'extrémité postérieure 6 du fuselage 1.

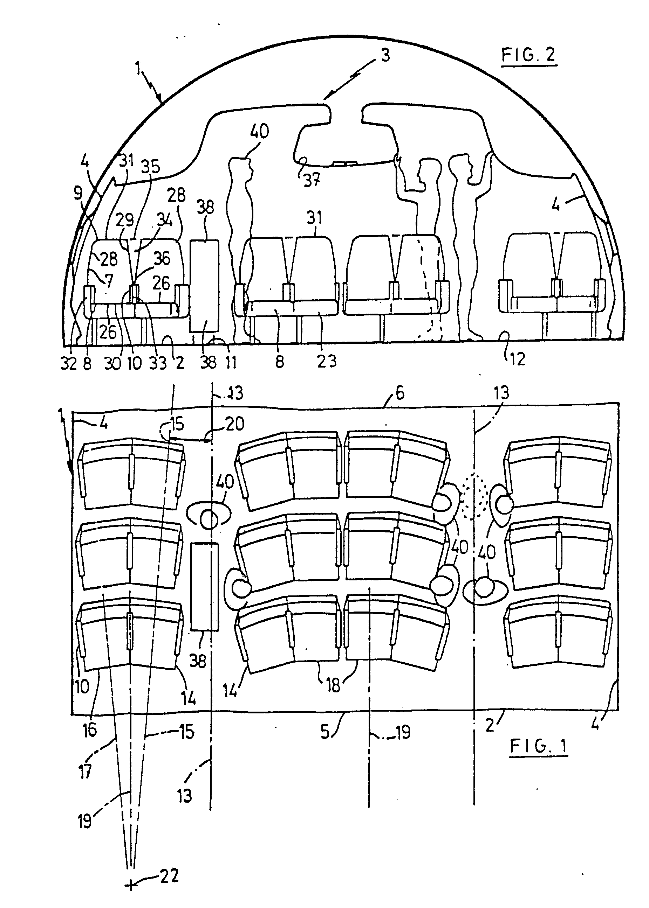

Par ailleurs, les sièges 18 non adjacents à un couloir, ni à l'une des parois latérales 4 ont leur plan de symétrie 19 parallèle au plan de symétrie longitudinal 13 des couloirs 11 et 12, comme montré aux figures 1 et 3.

Dans le cas d'une installation comprenant des rangées de trois sièges disposés transversalement entre une paroi latérale et un couloir, comme illustrée aux figures 3 et 4, l'angle aigu 20 formé par le plan de symétrie longitudinal 13 des couloirs 11,12 et le plan de symétrie des sièges 14 adjacents à un couloir et l'angle aigu 21 formé par le plan de symétrie 17 des sièges 16 adjacents à une paroi latérale 4 et par le plan de symétrie 13 dudit couloir sont égaux. On voit dans ce cas que les plans de symétrie 15 et 17 des sièges 14 et 16 convergent vers un même point 22 en avant des sièges, comme illustré aux figures 3 et 5.

De préférence, le siège 18 disposé entre deux sièges inclinés 14 et 16 aura son plan de symétrie 19 qui coïncidera avec le point de convergence 22 des plans de symétrie des deux sièges adjacents.

Dans ce cas, on peut réaliser un siège multiplace, c'est-à-dire formé de plusieurs sièges solidarisés par une coque commune.

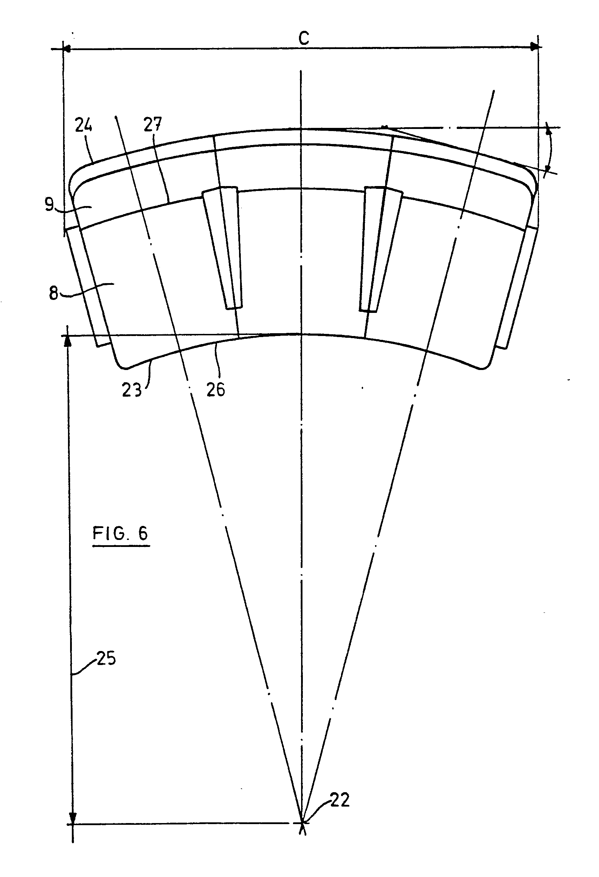

Comme montré à la figure 6, les faces antérieures 23 des assises 8 et les faces postérieures 24 des dossiers 9 forment des surfaces de révolution ayant un même axe vertical défini par l'intersection des plans de symétrie des trois sièges constituant le siège multiplace.

L'axe vertical est localisé à une distance 25 du bord antérieur des assises, comprise entre 1800 mm et 2400 mm en avant des assises et de préférence à 1900 mm environ de celles-ci.

Dans la forme de réalisation préférée montrée à la figure 6 les assises 8 vues en plan ont une forme de trapèze dont la petite base 26 constitue le bord antérieur de l'assise et dont la grande base 27 constitue son bord postérieur. Par contre, les dossiers 9, vus de face, comme montrés à la figure 2 ont sensiblement la forme d'un hexagone présentant quare côtés opposés 30, 31, 32 et 33 parallèles deux à deux et deux côtés opposés 28 et 29 adjacents au côté 31, inclinés vers le plan de symétrie du dossier. Les côtés 30 et 31, de même que les côtés 32 et 33 sont parallèles l'un à l'autre. Il se forme ainsi entre deux dossiers adjacents une ouverture triangulaire 34 dont la base 35 est située au niveau du bord supérieur des dossiers et dont le sommet 36 est situé au niveau des accoudoirs 10. En position verticale des dossiers, l'angle, à ce sommet est sensiblement égal à l'angle de convergence, soit 12° c'est-à-dire inférieur à 15° et supérieur à 5°. Avantageusement, les dossiers sont, de manière connue, rabattables vers l'avant autour d'un pivot transversal non représenté, en sorte qu'ils prennent appui sur les accoudoirs. Dans cette position, grâce à la convergence des dossiers adjacents, les côtés 29 sont parallèles et jointifs de manière à former une surface plane sensiblement parallèle au plancher. Dans ce cas l'angle du sommet 36 est égal à 0°. Les dossiers des sièges sont inclinables, de manière connue en soi, vers l'arrière, ce qui permet grâce à la convergence vers l'avant de leurs plans de symétrie, d'élargir davantage l'ouverture triangulaire entre deux dossiers adjacents en fonction de leur degré d'inclinaison vers l'arrière. On obtient ainsi plus d'espace entre épaules des occupants de ces sièges et on améliore ainsi considérablement le champ de visibilité des passagers occupant les sièges des rangées suivantes.

Dans la forme de réalisation de la figure 4, les rangées transversales de sièges situées entre les couloirs 11, 12 sont décalées longitudinalement par rapport aux rangées transversales de sièges sitées à l'interieur de ces couloirs d'une distance correspondant à environ la moitié du "pas" choisi pour le placement des rangées. Par "pas" on entend l'écartement entre deux points correspondants de deux rangées successives de sièges qui est sensiblement constant pour toutes les rangées. Ce décalage longitudinal de rangées de siége donne plus d'espace dans les couloirs facilitant ainsi l'accès aux armoires à bagages pour les passagers dont la présence est schématisée sur les figures par la notation de référence 40. En outre, un plus grand espace dans les couloirs permet à un passager 40 de croiser une table roulante de service 38 se trouvant dans le couloir.

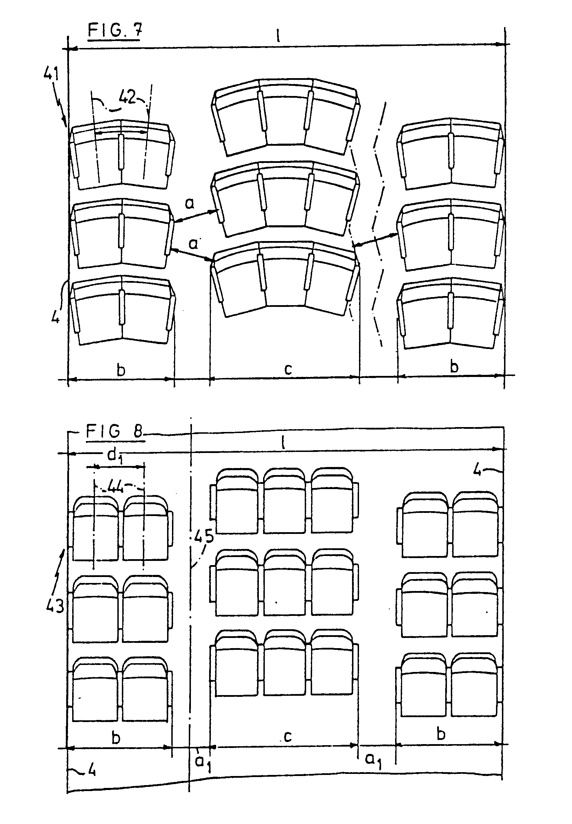

Pour illustrer le gain de place obtenu avec l'installation de sièges selon l'invention par rapport à deux installations du type connu, on se réfèrera maintenant aux figures 7, 8 et 9 qui représentent en 41 l'installation selon l'invention avec des rangées transversales de deux et de trois sièges juxtaposés dont les plans de symétrie 42 convergent vers l'avant des sièges; en 43 l'une des installations de sièges connues c'est-à-dire dont les plans de symétrie 44 de tous les sièges sont parallèles au plan de symétrie longitudinal 45 du couloir et en 46 l'autre installation de sièges connue, dont les plans de symétrie 47 de tous les sièges d'un même côté du couloir sont parallèles entre eux et forment un angle aigu 48 d'environ 30° avec le plan de symétrie 49 du couloir, ouvert vers l'avant des sièges.

Pour permettre la comparaison entre les diverses installations, on a monté les rangées de sièges de part et d'autre d'au moins un couloir longitudinal dans un habitacle ayant une même largeur $\underline{1}$ de 159 soit 4,039 mètres. En outre, les rangées de sièges adjacentes à l'une des parois latérales 4 ont été décalé longitudinalement par rapport aux rangées de sièges situées de l'autre côte du couloir adjacent d'une même distance correspondant à la moitié du "pas" constant choisi pour l'écartement des rangées successives.

Dans chacune des trois installations, une même fraction de la largeur $\underline{1}$ de l'habitacle a été utilisée pour les rangées selon de nombre de sièges soit:

- pour une rangée de deux sièges, une largeur $\underline{b}$ de 38 pouces soit 0,965 mètres;
- pour une rangée de trois sièges, une largeur $\underline{c}$ de 57 pouces, soit 1,448 mètre.

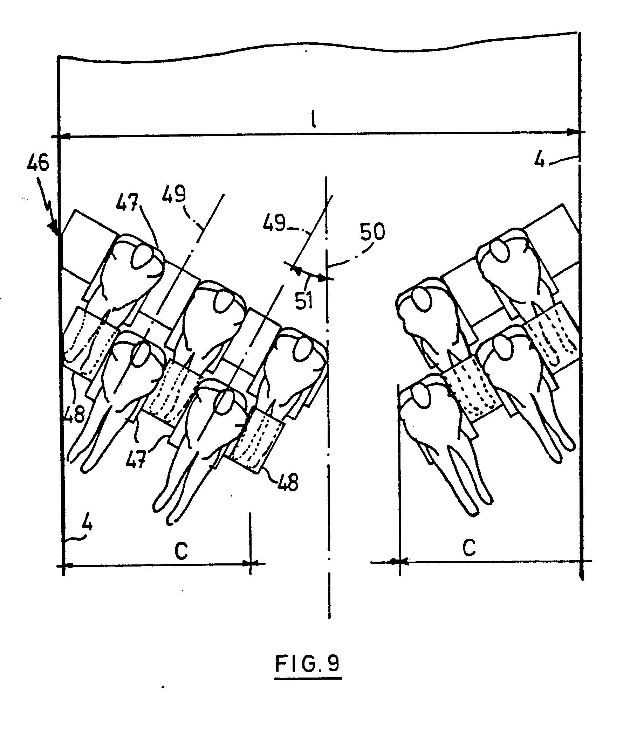

On constate alors qu'il subsiste, pour les deux couloires dans l'installation 41 selon l'invention, une largeur $\underline{a}$ entre sièges opposés de part et d'autre du couloir de 17 pouces (0,432 mètre) tandis que dans l'installation 43, il ne subsiste pour les couloirs qu'une largeur $a_1$ entre sièges opposés de part et d'autre d'un couloir de 13 pouces (0,330 mètre) seulement. Or, la largeur minimum pour un couloir est fixée, par les règlements internationaux, à 15 pouces soit 0,381 mètre. Il en résulte qu' avec l'installation 43 du type connu montrée à la figure 8, on ne peut installer dans un habitacle de 159 pouces (4,099 mètres) de large ayant deux couloirs longitudinaux que trois fois deux soit 6 sièges de front, tandis qu'avec l'installation 41 selon l'invention, on peut installer 7 sièges de front selon la répartition à raison de deux sièges entre chaque couloir et la paroi latérale adjacente et de trois sièges entre les couloirs.

En outre, avec l'installation 43 la distance $d_1$ entre les plans de symétrie parallèles 44 de deux sièges adjacents est de 18 pouces (0,457 mètre), tandis qu'avec l'installation 41, cette distance d'est d'au moins 19,6 pouces (0,498 mètre) et peut atteindre 20 pouces (0,508 mètres) lorsque la distance 25 (Fig. 5 et 6) est égale à la distance préférentielle de 1900 mm, grâce à la convergence des plans de symétrie de ces sièges. Les occupants disposent donc avec cette dernière installation d'une plus grande largeur au niveau des épaules. On se référera maintenant à l'autre installation connue 46 illustrée à la figure 9. Les sièges 47 sont munis de repose-jambes 48 et installés dans un habitacle de 159 pouces (4,039 mètres) de large en rangées transversales décalées longitudinalement de part et d'autre d'un seul couloir, les plans de symétrie 49 des sièges étant tous parallèles entre eux et formant avec le plan de symétrie 50 du couloir un angle aigu 51 d'environ 30° ouvert vers l'avant des sièges. En raison du degré d'inclinaison des plans de symétrie des sièges, et de l'installation de repose-jambes entre les assises des sièges de la rangée précédente, on constate que deux sièges juxtaposés occupent ensemble une largeur c de 57 pouces (1,448 mètre) soit 28,5 pouces (0,724 mètre) par siège. Le nombre de sièges pouvant être installés sur la largeur de l'habitacle sera

de 159 - 15 = $\frac{144}{28,5}$ = 5.

Par contre dans un habitacle de 159 pouces (4,039 mètre) comprenant deux couloirs de 15 pouces (0,381 mètre), soit 30 pouces (0,762 mètres), on devra repartir les sièges sur une largeur de 159-30 = 129 pouces, soit 3,277 mètres. Le nombre maximum de sièges sera alors de $\frac{129}{28,5}$ = 4, au lieu de 7 avec l'installation selon l'invention, comme montré à la figure 7.

Il est évident que l'invention n'est pas limitée exclusivement aux formes d'exécution représentées et que bien des modifications peuvent être apportées dans la forme, la disposition et le constitution de certains des éléments intervenant dans sa réalisation à condition que ces modifications ne viennent pas en contradiction avec chacune des revendications suivantes.

Ainsi, dans un mode de réalisation non représenté, les sièges sont dirigés vers l'extrémité postérieure de l'habitacle, au lieu d'être dirigés vers l'extrémité antérieure de celui-ci.

**Revendications**

1. Installation ou agencement de sièges (7) à l'intérieur d'un fuselage (1) à axe central d'un avion pressurisé pour le transport de passagers, comprenant une zone pour passagers délimitée par un plancher (2), un plafond (3) et des parois latérales s'étendant entre deux extremités antérieure (5) et postérieure (6) du fuselage (1), cette installation comportant des rangées d'au moins deux sièges contigus (7) montées sur le plancher précité d'un côté d'au moins un couloir longitudinal (11, 12) et dirigées vers l'extrémité antérieure (5) du fuselage (1), chaque rangée de sièges (7) ayant un plan vertical de symétrie (19) et chaque siège ayant également un plan vertical de symétrie (15, 17), le plan vertical de symétrie d'au moins un siège (7) de chaque rangée formant un angle avec un plan vertical parallèle à ou contenant l'axe central du fuselage (1), caractérisée en ce que les plans verticaux de symétrie (15, 17) de chaque siège d'extrémité (14, 16) de chaque rangée de sièges (7) convergent l'un vers l'autre et forment avec le plan vertical de symétrie (19), parallèle à ou contenant l'axe central du fuselage (1), de cette rangée de sièges un même angle aigu ouvert vers l'extrémité postérieure (6) du fuselage (1), cet angle étant inférieur à environ 15° et supérieur à environ 5°.

2. Installation suivant la revendication 1, caractérisée en ce que l'angle aigu précité est d'environ 12°.

3. Installation suivant l'une quelconque des revendications 1 et 2, dans laquelle chaque rangée de sièges contigus comprend au moins trois sièges (14, 16, 18), caractérisée en ce que le plan de symétrie du ou des sièges (18) non adjacents à un couloir (11,12) et le plan vertical de symétrie longitudinal (13) du couloir (11,12) sont parallèles.

4. Installation suivant l'une quelconque des revendications précédentes, caractérisée en ce que les rangées de sièges (7) disposées d'un côté d'un couloir (11, 12) sont décalées par rapport aux rangées de sièges disposées du côté opposé du même couloir (11,12).

5. Installation suivant l'une quelconque des revendications 1 à 3, caractérisée en ce que les rangées de sièges (7) disposées entre deux couloirs (11, 12) sont décalées par rapport aux rangées de sièges (7) disposées à l'extérieur de ces couloirs (11, 12) (figure 4).

6. Installation suivant la revendication 5, caractérisée en ce que le décalage des rangées de sièges (7) disposées entre deux couloirs (11, 12), par rapport aux rangées de sièges (7) disposées à l'extérieur de ces couloirs (11, 12) est sensiblement égal à la moitié de l'écartement entre deux points correspondant à deux rangées successives de sièges (7), disposées à l'extérieur de ces couloirs (11, 12).

**Claims**

1. Installation or arrangement of seats (7) inside a fuselage (1) having a central axis of a pressurized aircraft for the transportation of passengers, comprising an area for passengers defined by a floor (2), a ceiling (3) and side walls extending between two front (5) and rear (6) ends of the fuselage (1), this installation having rows of at least two adjacent seats (7) mounted on the above-mentioned floor on one side of at least one longitudinal aisle (11, 12) and directed towards the rear end (5) of the fuselage (1), each row of seats (7) having a vertical plane of symmetry (19) and each seat having also a vertical plane of symmetry (15, 17), the vertical plane of symmetry of at least one seat (7) of each row forming an angle with a vertical plane parallel to or containing the central axis of the fuselage (1), characterized in that the vertical planes of symmetry (15, 17) of each end seat (14, 16) of each row of seats (7) converge towards each other and form with the vertical plane of symmetry (19), parallel to or containing the central axis of the fuselage (1), of this row of seats a same acute angle opening towards the rear end (6) of the fuselage (1), this angle being lower than about 15° and greater than about 5°.

2. Installation according to claim 1, characterized in that the above mentioned acute angle is of about 12°.

3. Installation according to anyone of claims 1 and 2, in which each row of adjacent seats comprises at least three seats (14, 16, 18), characterized in that the plane of symmetry of the seat(s) non adjacent to an aisle (11, 12) and the longitudinal vertical plane of symmetry (13) of the aisle (11, 12) are parallel.

4. Installation according to anyone of the preceding claims, characterized in that the rows of seats (7) arranged on a side of an aisle (11, 12) are displaced with respect to the rows of seats on the opposite side of the same aisle (11, 12).

5. Installation according to anyone of claims 1 to 3, characterized in that the rows of seats (7) arranged between two aisles (11, 12) are displaced with respect to the rows of seats (7) arranged on the outside of these aisles (11, 12) (figure 4).

6. Installation according to claim 5, characterized in that the displacement of the rows of seats (7) arranged between two aisles (11, 12), with respect to the rows of seats (7) arranged at the outside of these aisles (11, 12) is substantially equal to the half of the spacing between two corresponding points of two successive rows of seats (7), arranged on the outside of these aisles (11, 12).

**Patentansprüche**

1. Anordnung und Befestigung von Sitzen (7) im Inneren eines Rumpfes (1) an der Mittelachse eines druckausgeglichenen Flugzeuges für den Transport von Passagieren, umfassend eine zone für Passagiere, abgegrenzt durch einen Boden (2), eine Decke (3) und Seitenwände, die sich sich vom vorderen zum hinteren Ende des Rumpfes (5, 6) erstrecken, wobei diese Anordung Reihen mit mindestens zwei nebeneinanderliegenden Sitzen (7) aufweist, die auf dem oben erwähnten Boden neben zumindest einem Längsgang (11, 12) befestigt sind, und die auf das vordere Ende (5) des Rumpfes (1) zugekehrt sind, wobei jede Sitzreihe eine vertikale Symmetrieebene (19) und jeder Sitz gleichermaßen eine vertikale Symmetrieebene (15, 17) aufweist, und wobei die vertikale Symmetrieebene von zumindest einem Sitz (7) jeder Reihe einen Winkel mit einer Vertikalebene bildet, die parallel zur Mittelachse des Rumpfes (1) ist oder diese enthält,
    dadurch gekennzeichnet,
    daß sich die vertikalen Symmetrieebenen (15, 17) jedes Außensitzes (14, 16) jeder Sitzreihe (7) einander nähern und mit der vertikalen Symmetrieebene (19) dieser Sitzreihe, welche parallel oder gleich der Mittelachse des Rumpfes (1) ist, einen gleich spitzen, zum hinteren Ende (6) des Rumpfes geöffneten Winkel bilden, wobei dieser Winkel kleiner als ungefähr 15° und größer als ungefähr 5° sein soll.

2. Anordnung nach Anspruch 1,
    dadurch gekennzeichnet,
    daß der obengenannte spitze Winkel ungefähr 12° beträgt.

3. Anordung gemäß einem der Ansprüche 1 und 2, wobei jede Reihe mit nebeneinander angeordneten Sitzen mindestens drei Sitze (14, 16, 18) aufweist,
    dadurch gekennzeichnet,
    daß die Symmetrieebene des bzw. der Sitze (18), die nicht an einen Gang (11, 12) angrenzen, und die vertikale Symmetrieebene (3) in Längsrichtung eines Ganges (11, 12) parallel sind.

4. Anordnung gemäß einem der vorhergehenden Ansprüche,
    dadurch gekennzeichnet,
    daß die Sitzreihen (7), die auf einer Seite des Ganges (11, 12) angeordnet sind, in bezug auf die Sitzreihen der gegenüberliegenden Seite des gleichen Ganges (11, 12) verschoben sind.

5. Anordnung gemäß einem der Ansprüche 1 bis 3,
    dadurch gekennzeichnet,
    daß die Sitzreihen (7), die zwischen zwei Gängen (11, 12) angeordnet sind, in bezug auf die Sitzreihen, die außenseitig dieser Gänge (11, 12) angeordnet sind, verschoben sind.

6. Anordung gemäß Anspruch 5,
    dadurch gekennzeichnet,
    daß die Verschiebung der Sitzreihen (7), die zwischen zwei Gängen (11, 12) angeordnet sind, in bezug auf die Sitzreihen, die an der Außenseite dieser Gänge (11, 12) angeordnet sind, genau gleich ist der Hälfte des Abstandes zwischen zwei übereinstimmenden Punkten von zwei aufeinanderfolgenden Sitzreihen (7), die an der Außenseite dieser Gänge angeordnet sind.

FIG. 2

FIG. 1

FIG. 3

FIG. 4

FIG. 5

FIG. 6

FIG. 7

FIG 8

FIG. 9